# EUROPEAN PATENT APPLICATION

(11) **EP 1 667 413 A2**
(43) Date of publication of application: **07.06.2006**
(21) Application number: 05026636.0
(22) Date of filing: 06.12.2005
(51) Int. Cl.: H04M 1/725

(54) **Method for processing conversation information in wireless terminal**

(30) Priority: 06.12.2004 KR 2004101824
(71) Applicant: Samsung Electronics Co., Ltd., Suwon-si, Gyeonggi-Do (KR)
(72) Inventor: Jung, Won-Suk, Samsung Electronics Co., Ltd, Suwon-si Gyeonggi-do (KR)
(74) Representative: Grünecker, Kinkeldey, Stockmair & Schwanhäusser Anwaltssozietät

(57) **Abstract**

Disclosed is a method for processing conversation information in a wireless terminal. The method includes registering information about a push-to-talk (PTT) conversation service subscriber currently performing push-to-talk conversation when a key for storing push-to-talk conversation data is input during execution of a push-to-talk conversation service, and storing push-to-talk conversation data of a subscriber of the push-to-talk wireless terminal and push-to-talk conversation data corresponding to the registered information about the push-to-talk conversation service subscriber when the push-to-talk conversation data are received. Accordingly, while PTT conversation service is being provided, PTT conversation data are stored, reproduced and then recognized, thereby ensuring reliability for a PTT conversation service which may be used only once. In addition, the stored PTT conversation data can be backed up using an e-mail or an MMS message, and PTT conversation data stored during the provision of the PTT conversation service can be transmitted to the counterpart of the PTT conversation, thereby preventing a repeated request for important information data such as conference-call due to the loss of the data using a document or a telephone.

## Description

The present invention relates to a wireless communication, and more particularly to a method for processing conversation information in a wireless terminal capable of storing, transmitting, and reproducing push-to-talk (PTT) data when a push-to-talk (PTT) service is used. The present invention further relates to a wireless terminal adapted for storing, transmitting and reproducing push-to-talk conversation data.

Generally, a wireless communication system of a wireless terminal divides an overall service area into a plurality of base station (BS) areas so as to construct cells which are small-scale service areas. A base station controls subscribers through centralized control using a mobile switching center (MSC) so that the subscribers can communicate while moving between the cells.

A variety of wireless terminal techniques in which a wireless communication network is combined with an Internet protocol (IP) network employing Internet-based protocols have developed with the development of communication techniques. An IP packet-based voice service called Voice over IP (VoIP) corresponds to one such technique.

Since a packet-based call service using the convention technique described above must establish a call through a wireless communication network and an IP network, a call establishing time is relatively long. To overcome this disadvantage, a service for interactive calls such as a group call and a private call can be provided using a multicast function of the IP network. Herein, the interactive call service is a kind of a call service allowing users to make communication through interaction between the users and includes a push to talk (PTT) function of a walkie-talkie service. The group call denotes a conference call between users in a group, and the private call denotes a 1:1 call between users in a group.

The PTT service can simultaneously provide a voice service and a data service to a plurality of users or a group. The users express their intention to communicate by pressing a button for the PTT service, and the user equipment (e.g., a wireless terminal capable of providing the PTT service (PTT wireless terminal)) transmits service requests of the users to a certain network. The network rejects the service requests or allocates requested resources to the users based on predetermined criteria such as availability of resources and the priority of the users having requested the PTT service. At the same time, connection between the users and all of the activated users in the group having specific users is established. After the establishment of a voice service connection, the users having requested the PTT service can transmit voice data and other users can receive voice data through an established channel. If the users release the PTT service connection, a corresponding PTT wireless terminal having released the PTT service connection transmits a release message signal to the network and the resources are released. Such PTT communication system enables a point-to-point communication service and a point-to-multipoint communication service. Herein, the point-to-multipoint communication service is called a "PTT group call" in a PTT service.

A PTT call between PTT wireless terminals begins when a calling PTT wireless terminal sends a PTT call request to a called PTT wireless terminal. The PTT call request is enabled by pressing a PTT button. The called PTT wireless terminal informs a user of the reception of the PTT call using a PTT alarm sound. The user of the called PTT wireless terminal recognizes the PTT alarm sound, which informs the user of the reception of the PTT call, and commences PTT communication together with a caller of the calling PTT portable terminal.

However, it is difficult for the conventional PTT wireless terminal to store PTT conversation data and reproduce the stored conversation data during the reception of a PTT conversation service. In particular, since it is difficult to transmit the stored PTT conversation data through an e-mail or an MMS message or to transmit PTT conversation data stored during the reception of a PTT conversation service to the counterpart of the PTT conversation service, users must again request important data such as conference-call data through a document or a telephone.

Accordingly, the present invention has been made to solve the above-mentioned problems occurring in the prior art.

It is the object of the present invention to provide a method for storing, transmitting, and reproducing push-to-talk (PTT) conversation data when a PTT service is provided.

This object is solved by the subject matter of the independent claims.

Preferred embodiments are defined in the dependent claims.

To accomplish the above, there is provided a method for storing push-to-talk (PTT) conversation data in a wireless terminal simultaneously performing a push-to-talk service between a certain push-to-talk conversation subscriber and at least two other push-to-talk conversation subscribers, the method including the steps of registering information about a push-to-talk conversation service subscriber currently performing push-to-talk conversation when a key for storing push-to-talk conversation data is input during the execution of a push-to-talk conversation service, and storing push-to-talk conversation data of a subscriber of the push-to-talk wireless terminal and push-to-talk conversation data corresponding to the registered information about the push-to-talk conversation service subscriber when the push-to-talk conversation data is received.

According to another aspect of the present invention, there is provided a method for reproducing push-to-talk conversation data in a wireless terminal capable of performing a push-to-talk service, the method including the steps of checking a remaining available capacity of a memory when a key for reproducing push-to-talk conversation data is input, displaying a message indicating a shortage of the memory capacity and displaying a push-to-talk conversation data storage list if the remaining capacity of the memory is less than a threshold value, reproducing selected push-to-talk conversation data when the push-to-talk conversation data is selected from the displayed push-to-talk conversation data storage list, and deleting the reproduced push-to-talk conversation data.

According to a further aspect of the present invention, there is provided a corresponding wireless terminal having means for storing, transmitting and reproducing push-to-talk conversation data according to the above methods.

The present invention will be more apparent from the following detailed description taken in conjunction with the accompanying drawings, in which:
FIG. 1 is a flowchart illustrating a typical initial PTT call processing procedure;
FIG. 2 is a block diagram illustrating the entire structure of a PTT wireless terminal according to one embodiment of the present invention;
FIGS. 3A and 3B are flowcharts illustrating a procedure of storing PTT conversation data according to a first embodiment of the present invention;
FIGS. 4A and 4B are flowcharts illustrating an operation of storing PTT conversation data according to the second embodiment of the present invention;
FIG. 5 is a flowchart illustrating an operation of reproducing PTT conversation data according to one embodiment of the present invention; and
FIG. 6 is a flowchart illustrating an operation of transmitting PTT conversation according to one embodiment of the present invention.

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

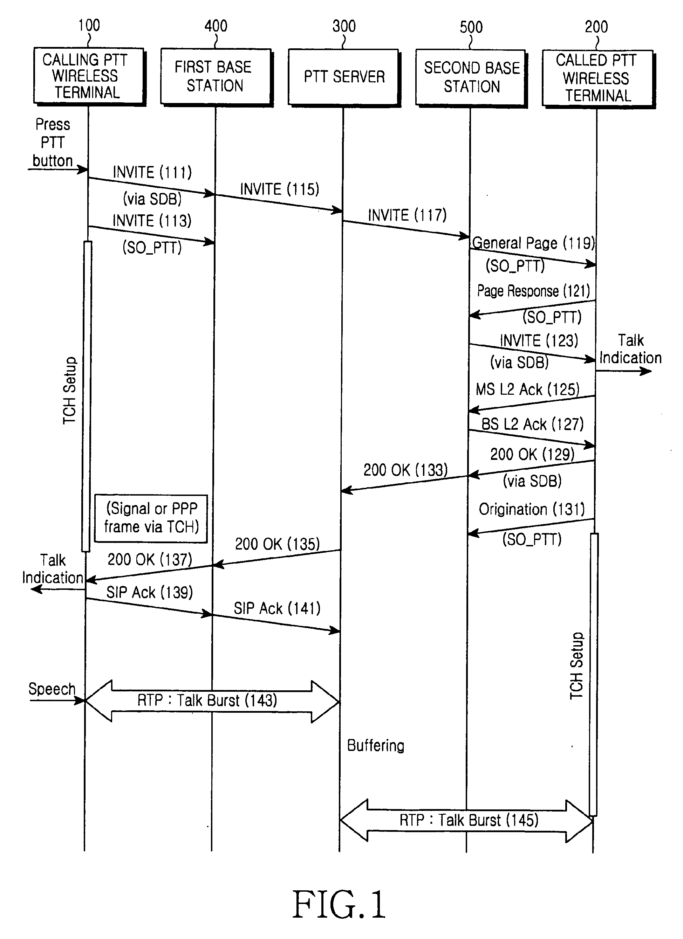

FIG. 1 is a flowchart illustrating a typical initial PTT call processing procedure when a called PTT wireless terminal invites a PTT call in a PTT call dormant state. In steps 111 to 145, a calling PTT wireless terminal 100 and a called PTT wireless terminal 200 perform a service option negotiation together with a first base station 400 and a second base station 500, respectively, so as to setup a traffic channel (TCH). Then, the terminals 100 and 200 perform voice communication using a PTT application program based on Session Initiation Protocol (SIP).

In step 111, the calling PTT wireless terminal 100 transmits a PTT call inviting signal to the first base station 400 in a short data burst (SDB). After transmitting the PTT call inviting signal, the calling PTT wireless terminal 100 sets up a traffic channel together with the first base station 400 while performing service option negotiation (SO_PTT) together with the first base station 400 in order to receive a PTT service in step 113. The service option negotiation is a procedure of preparing the upper class network session to an application layer from a physical layer including a PPP session and is expressed as "Origination".

Thereafter, in steps 115 to 117, the PTT call inviting signal is transmitted from the first base station 400 to a PTT server 300 and then to a second base station 500 providing a service to the called PTT wireless terminal 200. At this time, in steps 119 to 121, the second base station 500 is periodically transmitting a general page signal to the called PTT wireless terminal 200, and the called PTT wireless terminal 200 is transmitting a page response signal for the general page signal to the second base station 500. Thus, while performing the paging, the second base station 500 transmits the PTT call inviting signal in a short data burst (SDB) to the called PTT wireless terminal in step 117. Then, the called PTT wireless terminal 200 expresses the establishment of the PTT call so as to inform a call terminator of the establishment of the PTT call. However, the called PTT wireless terminal 200 does not transmit any voice data to the calling PTT wireless terminal 100 because a traffic channel has not yet been set-up.

In step 125, the called PTT wireless terminal 200 transmits "MS L2 Ack" to the second base station 500, which is a signal for reporting a normal reception of the PTT call inviting signal from the second base station 500. In step 127, the second base station 500 transmits "BS L2 Ack" to the called PTT wireless terminal 200, which is a signal for reporting the normal reception of the MS L2 Ack from the called PTT wireless terminal 200.

In step 129, the called PTT wireless terminal 200 transmits a "200 OK" message in a SDB to the second base station 500. The "200 OK" message informs the calling PTT wireless terminal 100 (having invited the initial PTT call) of the fact that the called PTT wireless terminal 200 accepts the PTT call inviting signal.

In step 131, directly after the transmission of the "200 OK" message, the called PTT wireless terminal 200 sets up the traffic channel while performing service option negotiation (SO_PTT) for the PTT service together with the second base station 500.

In steps 133 to 137, the "200_OK" message is transmitted to the calling PTT wireless terminal 100 through the PTT server 300 and the first base station 400, and the calling PTT wireless terminal 100 having received the "200_OK" message completes the traffic channel setup. Then, the calling PTT wireless terminal 100 expresses that the called PTT wireless terminal 200 has accepted the PTT call invitation, so that the PTT call is established.

In step 139 to 141, the calling PTT wireless terminal 100 requests a talk authority from the PTT server 300 using an "SIP Ack" signal in a session state and then performs step 143. The PTT server 300 controls the request of the talk authority so as to give the talk authority to the calling PTT wireless terminal 100.

In step 143, the calling PTT wireless terminal 100 having obtained the talk authority transmits a talk burst to the PTT server 300 using a real time protocol (RTP). The talk burst of the calling PTT wireless terminal 100 in step 143 is transmitted to the PTT server 300 and buffered. The talk burst of the calling PTT wireless terminal 100 buffered in the PTT server 300 is transmitted to the called PTT wireless terminal 200 from the PTT server 300 using the RTP according to the completion state of the traffic channel set up by the called PTT wireless terminal 200. In other words, the PTT server 300 transmits the talk burst buffered therein after the completion of the traffic channel set up by the called PTT wireless terminal 200.

Thereafter, the calling PTT wireless terminal 100 and the called PTT wireless terminal 200 obtain talk authority by using only the "SIP Ack" signal and an "SIP Response" signal (which is a response signal for the "SIP Ack" signal) without performing the service option negotiation together with the PTT server 300 after the traffic channel set up completion.

In the meantime, the called PTT wireless terminal 200 according to the present invention receives the PTT call inviting signal of the calling PTT wireless terminal 100 and then may store conversation data in a memory block of the called PTT wireless terminal 200 while receiving the voice data of a caller.

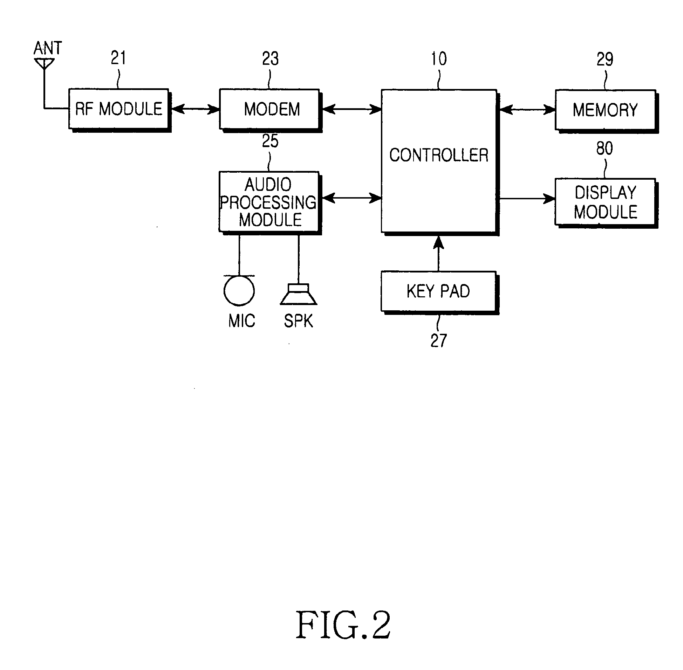

FIG. 2 is a block diagram illustrating the entire structure of a PTT wireless terminal according to one embodiment of the present invention. An RF module 21 handles the communication of the PTT wireless terminal. The RF module 21 includes an RF transmitter for up-converting and amplifying a frequency of a transmitted signal and an RF receiver for low noise amplifying a received signal and for down-converting a frequency of the received signal.

A modem 23 includes a transmitter for encoding and modulating the transmitted signal and a receiver for decoding and demodulating the received signal. In other words, the modem 23 process packet data or an audio signal such as a voice.

An audio processing module 25 receives an audio signal (output from the modem 23) from a controller 10 and converts the audio signal into an audible sound through a speaker. The audio processing module 25 receives an audio signal input from a microphone and converts it into data to be transmitted to the controller 10. In addition, the audio processing module 25 converts conversation data or a PTT alarm sound stored in a memory 29 into an audible sound to be output under the command for a PTT conversation reproduction mode.

A key pad 27 includes keys for inputting numeral and letter information and function keys for setting a variety of functions. In addition, the key pad 27 can set a conversation storage mode according to one embodiment of the present invention and may include function keys capable of reproducing conversation data stored in the conversation storage mode. For example, the key pad 27 may include a PTT conversation data storage mode key capable of setting or releasing the PTT conversation data storage mode through one key input and a conversation data reproducing key capable of reproducing conversation data stored in the PTT conversation data storage mode by means of one key input. In addition, the key pad 27 includes a PTT conversation data transmission key so as to instantly transmit stored PTT conversation data.

A memory 29 may include a program memory unit and a data memory unit. The program memory unit stores programs for controlling the general operation of the PTT conversation data. In addition, the program memory stores a program for outputting a PTT alarm sound reporting a received PTT call. In addition, the program memory stores programs used for setting a PTT conversation data storage mode. The program memory stores programs for reproducing and transmitting conversation data stored in the PTT conversation data storage mode.

The data memory unit temporarily stores data generated in the course of executing the programs. The data memory stores a voice of a caller received according to the setting of the conversation mode into a conversation data. In addition, the data memory stores information regarding the caller together with the conversation data. Herein, the information regarding the caller may include a phone number of the caller and a time in which the caller has received the PTT call. The data memory stores a conversation data storage list including the conversation data and the information regarding the caller.

The controller 10 controls the operation of the PTT wireless terminal. In addition, the controller 10 may include the modem 23. In addition, the controller 10 transmits audio data corresponding to an alarm sound for reporting the reception of the PTT call to the audio processing module 25 when the PTT call is received. In addition, the controller 10 controls an operation according to the setting of the PTT conversation data storage mode. The controller 10 stores conversation data in the memory 29 according to the PTT conversation data storage mode and transmits conversation data selected from the conversation data storage list including the conversation data to the audio processing module 25 such that conversation data can be reproduced. In addition, the control module 10 controls an operation of transmitting a stored PTT conversation data according to a PTT conversation data transmitting mode. In addition, when PTT conversation data is stored, reproduced, and transmitted, the controller 10 checks remaining capacity of the memory 29 by controlling the memory 29 and displays the remaining capacity on a display module 80.

The display module 80 displays messages occurring in the middle of executing a program under the control of the controller 10 and displays user data output from the controller 10. Herein, the user data includes a current time and icons representing a remaining amount of a battery, a receiver sensitivity rate, and a morning call setting state. In addition, the display module 80 displays a message representing a conversation storage mode setting state when a conversation storage mode is set. At this time, if the conversation storage mode is set, the display module 80 displays an information message that "a PTT conversation storage mode is set". Thereafter, the display module 80 shows an icon representing the conversation storage mode setting state. In addition, the display module 80 displays a conversation data storage list of conversation data stored in the conversation storage mode. The display module 80 displays information regarding a caller corresponding to conversation data selected from the conversation data storage list. In addition, the display module 80 displays an information message such as "Delete transmitted PTT conversation data?" after the PTT conversation data is transmitted. Herein, the display module 80 includes an LCD. In this case, the display module 80 may include an LCD controller, a memory capable of storing image data, and an LCD display element. When the LCD is realized through a touch screen scheme, the key pad 27 and the LCD may include an input module.

The operation of the PTT wireless terminal shown in FIG. 2 will now be described. When a user originates a call and when the user performs a dialing operation by means of the key pad 27 and then sets a call originating mode, the controller 10 detects the call dialing mode, processes dial information received through the modem 23, and then converts the dial information into an RF signal to be output through the RF module 21. Thereafter, when the counterpart of the user generates a response signal, the controller 10 detects the response signal through the RF module 10 and the modem 23. The user communicates through a voice channel formed by the audio processing module 25. In a call terminating mode, the controller 10 detects the setting of the call terminating mode through the modem 23 and generates a ring signal through the audio processing module 25. Thereafter, if the user responds to the ring signal, the controller 10 detects the response, and the audio processing module 25 forms a voice channel, so that a communication function is performed. Although a voice communication is described as one example in the call originating mode and the call terminating mode, data communication of transmitting/receiving packet data and video data may be performed in addition to or in place of the voice communication. In a waiting mode or in a case of character communication, the controller 10 displays character data processed through the modem 23 on the display module 35.

The storage of conversation data by the PTT wireless terminal will now be described.

The controller 10 checks and displays a remaining capacity of the memory by controlling the memory 29 and the display module 80 when storing PTT conversation data in PTT conversation. In addition, if the counterpart of PTT conversation to be applied to the PTT conversation data storage mode is set, the controller 10 receives a voice signal and stores in the memory 29 PTT conversation data with the set counterpart of the PTT conversation. In addition, the controller 10 checks the remaining capacity of the memory 29 by controlling the memory 29. If the remaining capacity of the memory 29 is less than a threshold value, the controller 10 controls the display module 80 so as to display a message indicating the shortage of a memory capacity and terminates the PTT conversation data storage mode. In addition, the controller 10 controls the memory 29 and the display module 80 so as to display a preset PTT conversation data storage folder list. If a preset PTT conversation data storage folder is selected, the controller 10 stores PTT conversation data in the selected folder.

If a conversation data reproducing key included in the key pad 27 is input, the controller 10 displays a conversation data storage list on the display module 80 and reads from the memory 29 conversation data selected in the conversation data storage list. The audio processing module 25 receives and processes conversation data read from the memory 29 through the controller 10, converts the conversation data into an audible sound, and then reproduces the conversation data through the speaker. In addition, the controller 10 controls the memory 29 and the display module 80 so as to display a message indicating the deletion of the PTT conversation data. If a delete command of the PTT conversation data is issued, the reproduced PTT conversation data is deleted.

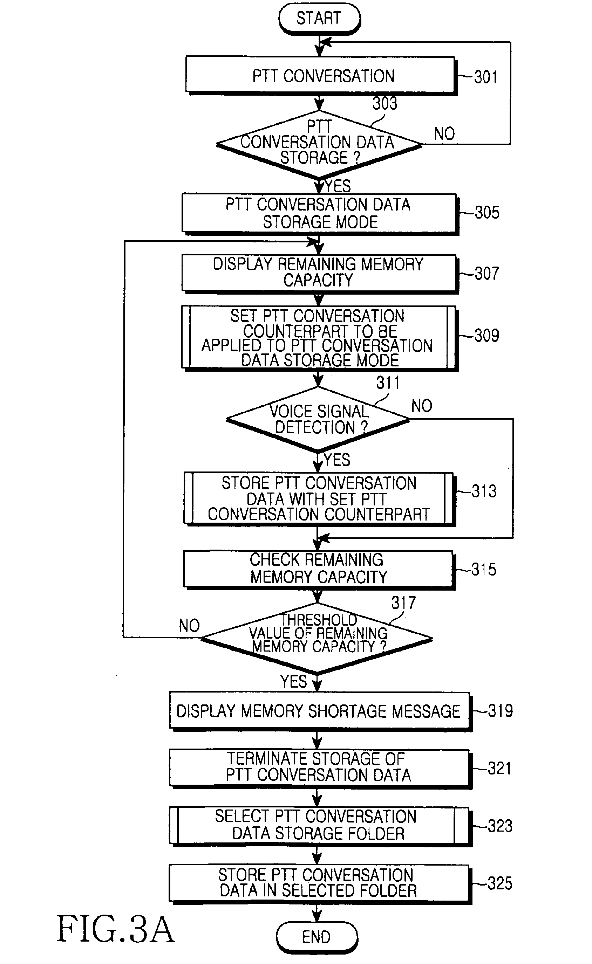

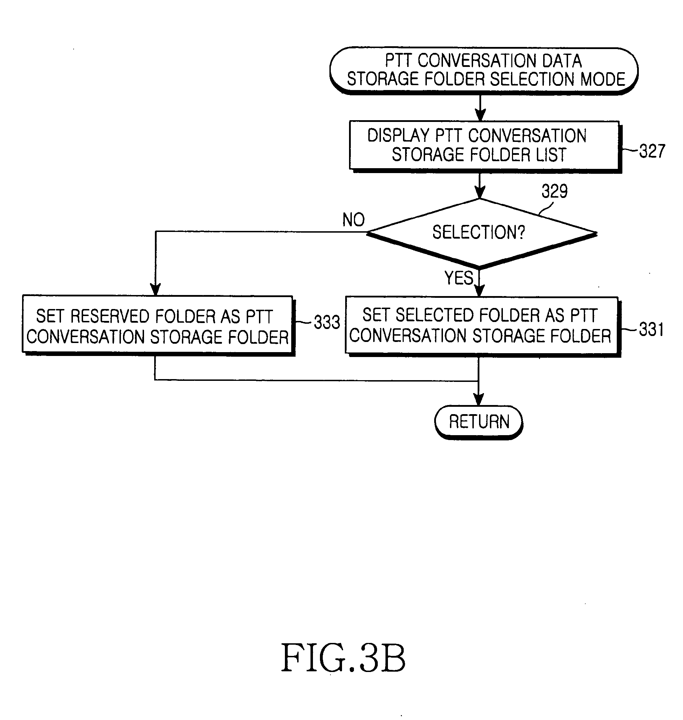

FIGS. 3A and 3B are flowcharts illustrating a procedure of storing PTT conversation data according to a first embodiment of the present invention. Hereinafter, a method, in which a counterpart to be applied to a PTT conversation data storage mode and a folder storing PTT conversation data are selected, and PTT conversation data obtained by conversing with the counterpart are stored in the selected folder, will be described with reference to FIGS. 3A and 3B. In step 301, the controller 10 transmits a PTT call to a desired participant of a PTT group selected through the key pad 27, thereby performing a PTT group conversation. If talk authority using the "SIP Ack" signal through steps 139 to 141 shown in FIG. 1 is requested, the talk authority is given under the control of the PTT server 300, thereby achieving the PTT group conversation.

If a user inputs a key for a PTT conversation data storage mode using the key pad 27, the controller 10 detects the key input in step 303 and sets the PTT conversation data storage mode in step 305. The PTT conversation data storage mode may be set by means of the key for the PTT conversation data storage mode or a menu. In addition, the PTT conversation data storage mode may be released by means of the key for the PTT conversation data storage mode or a menu.

In step 307, the controller 10 controls the memory 29 and the display module 80 so as to check and display a remaining capacity of the memory 29 capable of storing PTT conversation data. In step 309, the controller controls the memory 29 so as to set a counterpart of the PTT conversation to be applied to the PTT conversation data storage mode. In a more detailed description about step 309, the controller 10 controls the display module 80 so as to display a list of counterparts in PTT conversation for setting a counterpart to be applied to the PTT conversation data storage mode as shown in Table 1.

**Table 1**

| | List of counterparts corresponding to PTT conversation data storage mode |
|---|---|
| 1 | Store all PTT conversation data |
| 2 | Chan Hyeok - sleepiness |
| 3 | Hak June - winter |
| 4 | Ji Yeon - sulkiness |
| 5 | Store my voice |

If a user selects the first item from the list of counterparts corresponding to a PTT conversation data storage mode shown in Table 1, PTT conversation data obtained by conversing with all counterpart of the PTT conversation are stored. If the user selects the second item, PTT conversation data obtained by conversing with 'Chan Hyeok - sleepiness' among the counterparts of the PTT conversation are stored. If the user selects the third item, PTT conversation data obtained by conversing with 'Hak June-winter' among the counterparts of the PTT conversation are stored. If the user selects the fourth item, PTT conversation data obtained by conversing with 'Ji Yeon-sulkiness' the counterparts of the PTT conversation are stored. If the use selects the fifth item, only PTT conversation data said by the user are stored. In addition, a check box is added to the list, thereby enabling the storage of PTT conversation data obtained by conversing with a plurality of counterparts selected by the user. A PTT conversation service through the above described technique is achieved by providing an IP packet-based service supporting an interaction call such as a group call or a private call through a multicast function of an IP network.

In the PTT service, a voice of a caller is transmitted as data in the type of a packet, and information regarding the caller is transmitted and registered. Herein, the information regarding the caller includes a phone number of the caller, a time in which the caller receives the PTT call, and a call identifier.

In addition, a specific time interval (one minutes, five minutes, ten minutes, etc.) is set with the setting of the counterparts, thereby storing the PTT conversation data until the specific time interval. In addition, a capacity of a memory (50 bytes, 100 bytes, and 150 bytes) is set, thereby storing the PTT conversation data by the set capacity of the memory.

If a counterpart to be applied to the PTT conversation data storage mode is selected, the controller 10 determines if a voice signal is detected in step 311. If the voice signal is detected, the controller 10 stores PTT conversation data obtained by conversing with the selected counterpart of the PTT conversation in a temporary buffer in step 313 and performs step 315. If a voice signal is not detected in step 311, the controller 10 checks a remaining capacity of a memory capable of storing the PTT conversation data by controlling the memory 29 in step 315. If the remaining capacity of the memory 29 is equal to or greater than a threshold value, the controller 10 detects this in step 317 and newly displays a remaining capacity of the memory 29 in step 307. However, if the remaining capacity of the memory 29 is less than a threshold value, the controller 10 detects this in step 317 and controls the display module 80 so as to display a message indicating the shortage of a memory capacity in step 319. The message indicating the shortage of the memory capacity may be expressed using a text message for example, "A memory space for data storage is insufficient", an icon, or a voice. If the message indicating the shortage of the memory capacity is displayed, the controller 10 terminates the PTT conversation data storage mode in step 321 and performs a PTT conversation data storage folder selecting mode in step 323. The folder is used as a menu and may be expressed in the type of a phone book or a menu list. A more detailed description about step 323 will be given with reference to FIG. 3B. If the PTT conversation data storage mode is terminated, the controller 10 expresses the PTT conversation data storage folder list as Table 2 by controlling the memory 29 in step 327.

**Table 2**

| | PTT conversation data storage folder list |
|---|---|
| 1 | Friend |
| 2 | Firm |
| 3 | Association |
| 4 | Reserved |
| 5 | Security |

If the user selects the friend folder (which is the first item) from the PTT conversation data storage folder list shown in Table 2 using the key pad 27, the controller 10 detects this in step 329 and sets the selected friend folder (which is the first item) as a PTT conversation data storage folder in step 331. If the user selects the firm folder (which is the second item) from the PTT conversation data storage folder list using the key pad 27, the controller 10 detects this in step 329 and sets the selected firm folder (which is the second item) as the PTT conversation data storage folder in step 331. If the user selects the association folder (which is the third item) from the PTT conversation data storage folder list using the key pad 27, the controller 10 detects this in step 329 and sets the selected association folder (which is the third item) as the PTT conversation data storage folder in step 331. If the user selects the reserved folder (which is the fourth item) from the PTT conversation data storage folder list using the key pad 27, the controller 10 detects this in step 329 and sets the selected reserved folder (which is the fourth item) as the PTT conversation data storage folder in step 331. If the user selects the security folder (which is the fifth item) from the PTT conversation data storage folder list using the key pad 27, the controller 10 detects this in step 329 and sets the selected security folder (which is the fifth item) as the PTT conversation data storage folder in step 331. Herein, the security folder requires certain procedures such as password authentication when the user accesses the security folder. In addition, the password authentication procedure may be set for every folder. However, if the user does not select a PTT conversation data storage folder from the PTT conversation data storage folder list during a set time interval, the controller 10 sets the reserved folder (which is the fourth folder) as the PTT conversation data storage folder in step 333.

Although the PTT conversation data storage folder list is constructed according to each group in the above description, the PTT conversation data storage folder list may be constructed according to a date, a day of the week, and a time in which the PTT conversation data are stored or may be constructed according to the size of the stored PTT conversation data.

If the PTT conversation data storage folder is set, the controller 10 copies the PTT conversation data stored in the temporary buffer to the set PTT conversation data storage folder. The PTT conversation data may be stored as character data. The title of the PTT conversation data may be automatically input while including a call identifier, a PTT conversation receiving time, a phone number of the counterpart set in the PTT conversation data storage mode. In addition, the title of the PTT conversation data may be automatically input using the first sentence of the PTT conversation data or may be input by the user.

For example, if the user selects the friend folder (which is the first item) using the key pad 27, the controller 10 detects this, sets the selected friend folder as the PTT conversation data storage folder, and then copies the PTT conversation data stored in the temporary buffer to the friend folder. If the user selects the firm folder (which is the second item) using the key pad 27, the controller 10 detects this, sets the selected firm folder as the PTT conversation data storage folder, and then copies the PTT conversation data stored in the temporary buffer to the firm folder.

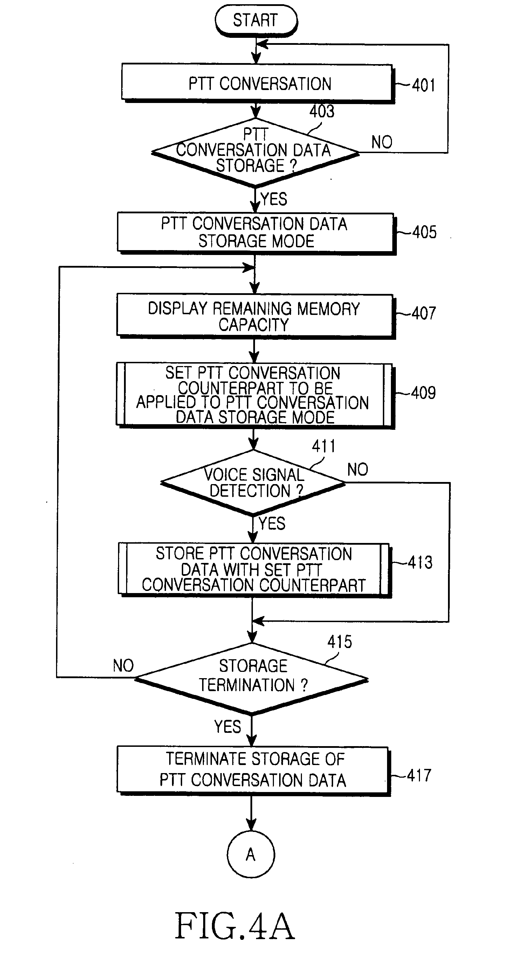

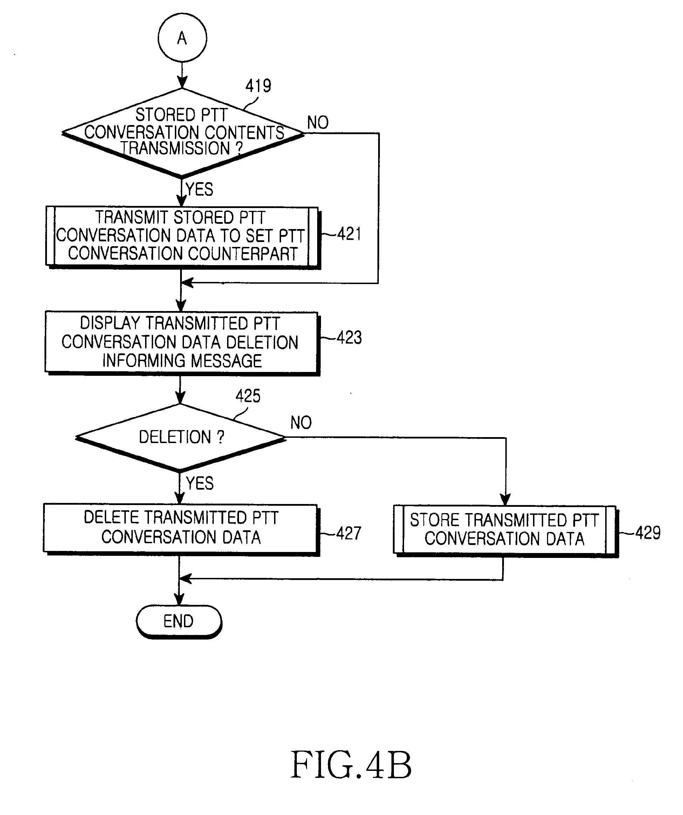

FIGS. 4A and 4B are flowcharts illustrating an operation of storing PTT conversation data according to the second embodiment of the present invention. Hereinafter, a method, in which a counterpart to be applied to a PTT conversation data storage mode is selected, PTT conversation data obtained by conversing with the selected counterpart are stored, and the stored PTT conversation data is transmitted to the selected counterpart, will be described with reference to FIGS. 4A and 4B. In step 401, the controller 10 transmits a PTT call to a desired participant of a PTT group selected through the key pad 27, thereby performing a PTT group conversation. If talk authority using the "SIP Ack" signal through steps 139 to 141 shown in FIG. 1 is requested, the talk authority is given under the control of the PTT server 300, thereby achieving the PTT group conversation.

If a user inputs a key for a PTT conversation data storage mode using the key pad 27, the controller 10 detects the key input in step 403 and sets the PTT conversation data storage mode in step 405. The PTT conversation data storage mode may be set by means of the key for the PTT conversation data storage mode or a menu. In addition, the PTT conversation data storage mode may be released by means of the key for the PTT conversation data storage mode or a menu.

In step 407, the controller 10 controls the memory 29 and the display module 80 so as to check and display a remaining capacity of the memory 29 capable of storing PTT conversation data. In step 409, the controller 10 controls the memory 29 so as to set a counterpart of the PTT conversation to be applied to the PTT conversation data storage mode. Herein, step 409 which is a step of setting the counterpart to be applied to the PTT conversation data storage mode has been described in detail with reference FIG. 3A. If the counterpart to be applied to the PTT conversation storage mode is set, the controller 10 determines if a voice signal is detected in step 411. If the voice signal is detected, the controller 10 stores PTT conversation data obtained by conversing with the set counterpart of the PTT conversation in a temporary buffer in step 413. Thereafter, if the user inputs a key of terminating the PTT conversation data storage mode using the key pad 27, the controller 10 detects this in step 415 and terminates the PTT conversation data storage mode in step 417.

Thereafter, if the user inputs a PTT conversation data transmitting key using the key pad 27, the controller 10 detects this in step 419 and transmits the stored PTT conversation data to the set counterpart of the PTT conversation in step 421. This is achieved through a scheme in which the stored PTT conversation data are uploaded to the PTT server through the RTP server according to the completion of data transmission preparation by the PTT wireless terminal, and the PTT server analyzes information regarding the set counterpart of the PTT conversation so as to transmit the uploaded PTT conversation data to the set counterpart of the PTT conversation. In addition, a step of selecting a counterpart for transmitting the stored PTT conversation data is added to the operation of storing the PTT conversation data, so that a counterpart receiving the stored PTT conversation data can be set.

If the stored PTT conversation data are transmitted, the controller 10 controls the memory 29 and the display module 80 so as to display a message of issuing a deletion command of the transmitted PTT conversation data in step 423. If the user selects the deletion of the transmitted PTT conversation data using the key pad 27, the controller 10 deletes the transmitted PTT conversation data in step 427. However, if the user selects the storage of the transmitted PTT conversation data using the key pad 27, the controller 10 controls the memory 29 so as to store the transmitted PTT conversation data in step 429. Herein, step 429 of storing the transmitted PTT conversation data has been described in more detail in steps 323 to 325 shown in FIG. 3A and in steps 327 to 333 shown in FIG. 3B.

In addition, the stored PTT conversation data may be reproduced when the user inputs a key of reproducing the PTT conversation data through the key pad 27. In addition, the stored PTT conversation data may be reproduced while the PTT conversation service is being reproduced.

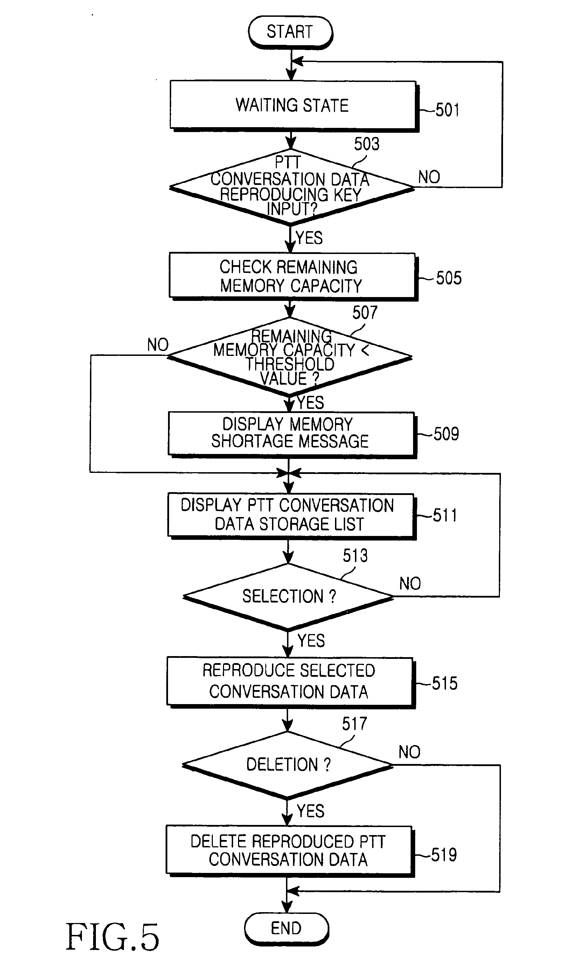

FIG. 5 is a flowchart illustrating an operation of reproducing PTT conversation data according to one embodiment of the present invention. Hereinafter, a method of reproducing and deleting the stored PTT conversation data will be described with reference to FIG. 5. In step 501 representing a waiting state, if a user inputs the key of reproducing PTT conversation data using the key pad 27, the controller 10 detects this in step 503 and controls the memory 29 to check a remaining capacity of a memory capable of storing the PTT conversation data in step 505. As the check result, if the remaining capacity of the memory is greater than or equal to a threshold value, the controller 10 detects this in step 507 and performs step 511. However, as the check result, if the remaining capacity of the memory is less than the threshold value, the controller 10 detects this in step 507 and controls the display module 80 so as to display a message indicating the shortage of the memory capacity in step 509 and performs step 511. The message indicating the shortage of the memory capacity may be expressed as a text message, for example, "A memory space for data storage is insufficient", an icon, or a voice.

In step 511, the controller 10 controls the memory 29 and the display module to display a PTT conversation data storage list. In addition, if the user selects PTT conversation data to be reproduced from the displayed PTT conversation data storage list using the key pad 27, the controller 10 detects this in step 513 and performs step 515. Herein, the PTT conversation storage list may be realized as a type similar to a phone book. In addition, the PTT conversation storage list may be realized in such a manner that the PTT conversation data list can be stored in the upper class folder. In step 515, the controller 10 controls the memory 29 and the audio processing module 25 so as to read out the selected PTT conversation data and reproduce the PTT conversation through the speaker. In addition, when the PTT conversation data is stored and reproduced as character data, the PTT conversation data may be expressed as characters. Thereafter, if the user inputs a key for deleting PTT conversation data using the key pad 37 in order to delete the PTT conversation data, the controller 10 detects this in step 517 and controls the memory 29 to delete the reproduced PTT conversation data in step 519.

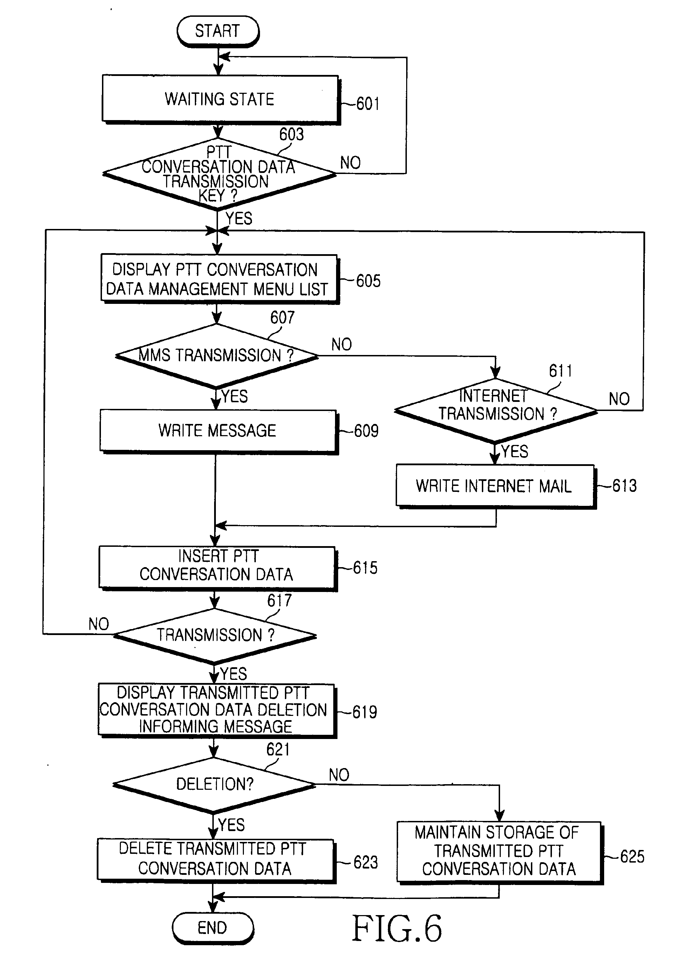

FIG. 6 is a flowchart illustrating an operation of transmitting PTT conversation according to one embodiment of the present invention. Hereinafter, the operation of transmitting stored PTT conversation data will be described with reference to FIG. 6. In step 601 representing a waiting state, if a user inputs a key for transmitting the PTT conversation data using the key pad 27, the controller 10 detects this in step 603 and performs step 605. In step 605, the controller 10 controls the memory 29 so as to display a PTT conversation data transmission menu list. If the user selects a MMS message transmission menu from the displayed PTT conversation data transmission menu list using the key pad 27 in order to transmit the PTT conversation data, the controller 10 detects this in step 607 and performs step 609. In step 609, the controller 10 controls the memory 29 so as to store a message written by the user using the key pad 27 and performs step 615. In addition, if the user selects an Internet transmission menu from the displayed PTT conversation data transmission menu list using the key pad 27 in order to transmit the PTT conversation data, the controller 10 detects this in step 611 and performs step 613. In step 613, the controller 10 controls the memory 29 so as to store an Internet mail written by the user using the key pad 27 and performs step 615.

In step 615, the controller 10 controls the memory 29 and the display module 80 so as to display the PTT conversation data storage list. Herein, the PTT conversation storage list may be realized as a type similar to a phone book. In addition, the PTT conversation storage list may be realized in such a manner that the PTT conversation data list can be stored in the upper class folder.

If the user selects PTT conversation data to be inserted into the written message or the written mail from the displayed PTT conversation data storage list using the key pad 27, the controller 10 inserts the selected PTT conversation data into the written message or the written mail. In addition, if the user inputs the transmission key using the key pad 27, the control module 10 controls the RF module 21 to transmit the message or the mail including the PTT conversation data.

If the message or the mail including the PTT conversation data is transmitted, the controller 10 controls the memory 29 and the display module 80 so as to display a message for the deletion of the transmitted PTT conversation data in step 619. If the user selects the deletion of the transmitted PTT conversation data using the key pad 27, the controller 10 deletes the transmitted PTT conversation data in step 623. However, if the user selects the storage of the transmitted PTT conversation data using the key pad 27, the controller 10 controls the memory 29 to maintain the storage state of the transmitted PTT conversation data in step 626. Although an MMS message and an Internet mail are described as examples in the above description, the stored PTT conversation data may be transmitted through short range communication such as Bluetooth and irDA (Infrared Data Association).

As described above, according to the present invention, while PTT conversation service is being provided, PTT conversation data is stored, reproduced and then recognized, thereby ensuring reliability for a PTT conversation service which may be used only once. In addition, according to the present invention, the stored PTT conversation data can be backed up using an e-mail or an MMS message, and PTT conversation data stored during the provision of the PTT conversation service are transmitted to the counterpart of the PTT conversation, thereby preventing a repeated request for important information data such as conference-call due to the loss of the data using a document or a telephone.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims.

## Claims

1. A method for storing push-to-talk conversation data in a wireless terminal simultaneously performing a push-to-talk service between a first push-to-talk conversation subscriber and at least one other push-to-talk conversation subscribers, the method comprising the steps of:
registering information about a push-to-talk conversation service subscriber currently performing push-to-talk conversation when a key for storing push-to-talk conversation data is input during execution of a push-to-talk conversation service; and
storing push-to-talk conversation data of a subscriber of the push-to-talk wireless terminal and push-to-talk conversation data corresponding to the registered information about the push-to-talk conversation service subscriber when the push-to-talk conversation data is received.

2. A method for storing push-to-talk conversation data in a wireless terminal simultaneously performing a push-to-talk service between a first push-to-talk conversation subscriber and at least one other push-to-talk conversation subscribers, the method comprising the steps of:
registering information about a push-to-talk conversation service subscriber currently performing push-to-talk conversation when a key for storing push-to-talk conversation data is input during execution of a push-to-talk conversation service;
storing the registered information about the push-to-talk conversation service subscriber and push-to-talk conversation data corresponding to the registered information about the push-to-talk conversation service subscriber when the push-to-talk conversation data is received; and
transmitting the stored push-to-talk conversation data and the stored information about the registered push-to-talk conversation service subscriber to a push-to-talk server and transmitting the stored push-to-talk conversation data to a wireless terminal of the registered push-to-talk conversation service subscriber when a key for transmitting push-to-talk conversation data is input.

3. The method as claimed in claim 1 or 2, wherein the information about the push-to-talk conversation service subscriber includes a phone number of the subscriber, a push-to-talk conversation time of the subscriber, and a subscriber identifier.

4. The method as claimed in one of claims 1 to 3, further comprising the steps of:
displaying a push-to-talk conversation service subscriber list when the push-to-talk conversation data is received; and
selecting from the displayed push-to-talk conversation service subscriber list a push-to-talk conversation service subscriber in order to store and distinguish push-to-talk conversation data.

5. The method as claimed in one of claims 1 to 4, wherein the step of storing push-to-talk conversation data further comprises:
checking a remaining capacity of a memory while storing the extracted push-to-talk conversation data;
storing all of the extracted push-to-talk conversation data if the remaining capacity of the memory is greater than or equal to a threshold value; and
displaying a message indicating a shortage of the memory capacity and terminating storage of push-to-talk conversation data if the remaining capacity of the memory is less than the threshold value.

6. A method for storing push-to-talk conversation data in a wireless terminal performing simultaneously a push-to-talk service between a first push-to-talk conversation subscriber and at least one other push-to-talk conversation subscribers, the method comprising the steps of:
displaying a push-to-talk conversation service subscriber list when a key for storing push-to-talk conversation data is input during execution of a push-to-talk conversation service;
registering information about a selected push-to-talk conversation service subscriber when the push-to-talk conversation service subscriber for storing and distinguishing push-to-talk conversation data is selected from the displayed push-to-talk conversation service subscriber list;
extracting push-to-talk conversation data corresponding to the registered push-to-talk conversation service subscriber information when the push-to-talk conversation data is received;
displaying a preset storage menu list when a key for terminating storage of push-to-talk conversation data is input; and
storing the extracted push-to-talk conversation data corresponding to a selected menu when the menu for storing the extracted push-to-talk conversation data is selected from the displayed storage menu list.

7. The method as claimed in claim 6, wherein the storage menu list is in a folder type and includes a group name, a push-to-talk conversation time and a subscriber identifier.

8. A method for reproducing push-to-talk conversation data in a wireless terminal capable of performing a push-to-talk service, the method comprising the steps of:
checking a remaining available capacity of a memory when a key for reproducing push-to-talk conversation data is input;
displaying a message indicating a shortage of a memory capacity and displaying a push-to-talk conversation data storage list if the remaining capacity of the memory is less than a threshold value;
reproducing selected push-to-talk conversation data when the push-to-talk conversation data are selected from the displayed push-to-talk conversation data storage list; and
deleting the reproduced push-to-talk conversation data.

9. The method as claimed in claim 8, wherein the step of deleting the reproduced push-to-talk conversation data, further comprises the steps of:
displaying a message for selecting deletion of reproduced push-to-talk conversation data;
deleting the reproduced push-to-talk conversation data when the deletion of the reproduced push-to-talk conversation data is selected; and
storing the reproduced push-to-talk conversation data when storage of the reproduced push-to-talk conversation data is selected.

10. A method for transmitting stored push-to-talk conversation data using a communication service in a wireless terminal capable of performing push-to-talk service, the method comprising the steps of:
displaying a preset conversation service menu;
selecting from the displayed conversation service menu a communication service used for transmitting the push-to-talk conversation data;
registering information about an incoming call required for carrying out the selected communication service;
inserting the push-to-talk conversation data to be transmitted into the registered information about the incoming call; and
transmitting the inserted push-to-talk conversation data using the information about the incoming call when a key for transmitting the push-to-talk conversation data is input.

11. The method as claimed in claim 10, wherein the communication service menu includes an MMS message, Internet, Bluetooth, and IrDA.

12. The method as claimed in claim 10 or 11, wherein the step of inserting the push-to-talk conversation data to be transmitted into the registered information about the incoming call, further comprises the steps of:
displaying a push-to-talk conversation data storage list; and
selecting from the displayed push-to-talk conversation data storage list push-to-talk conversation data.

13. The method as claimed in one of claims 10 to 12, wherein the information about the incoming call includes one of an incoming call number and an e-mail address according the selected communication service.

14. A wireless terminal having means adapted for performing the method steps according to one of claims 1 to 13.
